# EUROPÄISCHE PATENTANMELDUNG

(11) **EP 1 978 329 A1**
(43) Veröffentlichungstag der Anmeldung: **08.10.2008**
(21) Anmeldenummer: 07007089.1
(22) Anmeldetag: 04.04.2007
(51) Int. Cl.: G01B 11/24, G01B 11/245, B21B 38/04

(54) **Verfahren zur Rundheitsmessung von Rundprofilen**

(71) Anmelder: ZUMBACH ELECTRONIC AG, CH-2552 Orpund (CH)
(72) Erfinder: Studer, Urs-Peter, 4125 Riehen/BS (CH)
(74) Vertreter: Köster, Hajo

(57) **Zusammenfassung**

Die Erfindung betrifft ein Verfahren zur Rundheitsmessung oder Messung der Formabweichung von in ihrer Längsrichtung vorbewegten Rundprofilen in Walzstraßen, bei dem auf per se bekannte Weise mit Hilfe einer Messeinrichtung mit mindestens zwei Laserscannern, die jeweils einen lichtempfindlichen Sensor und einen Laser aufweisen, mindestens drei an dem zu vermessende Rundprofil anliegende und das Rundprofil umschließende, ein Polygon bildende Schattenkanten erzeugt und vermessen und daraus die entsprechenden Tangenten errechnet werden. Dieses Verfahren ist dadurch gekennzeichnet, dass a) vor der Messung ein Zentrum (Zₒ) in dem Messfeld der Messeinrichtung kalibriert und festgelegt wird, sofern ein derartiges Zentrum (Z₀) noch nicht festgelegt wurde, b) Senkrechte (r₁, bis r_{6'}) vom Zentrum (Zₒ) zu den Tangenten (T₁, bis T_{6'}) bestimmt und somit der Abstand vom Zentrum (Zₒ) zu den Tangenten (T₁ - T_{6'}) errechnet wird, c) die Eckpunkte (A bis K) des das Rundprofil umschließenden Polygons errechnet werden, wobei eine Kontur ermittelt wird, d) bezüglich der Kontur ein Bezugskreis derart gelegt wird, dass i) die quadratische Formabweichung der Kontur zu diesem Bezugskreis ein Minimum erreicht, ii) der Bezugskreis den kleinstmöglichen Kreis darstellt, der um die Kontur passt, iii) der Bezugskreis den größtmöglichen Kreis darstellt, der in die Kontur passt, oder iv) der Bezugskreis zusammen mit einem weiteren, zu dem Bezugskreis konzentrischen Kreis die Kontur bei minimaler Radiendifferenz einschließt, e) der Durchmesser (D_{ref}) des Bezugskreises errechnet und aus der Lage im Raum das Bezugszentrum (Zₚ), das den Mittelpunkt des Bezugskreises darstellt, bestimmt wird und f) mindestens zwei Vektoren von diesem Bezugszentrum (Zₚ) zur Kontur berechnet werden und aus diesen Daten die Unrundheit bestimmt wird.

## Beschreibung

Die Erfindung betrifft ein Verfahren zur Rundheitsmessung oder Messung der Formabweichung von in ihrer Längsrichtung vorbewegten Rundprofilen in Walzstraßen, bei dem auf per se bekannte Weise mit Hilfe einer Messeinrichtung mit mindestens zwei Laserscannern, die jeweils einen lichtempfindlichen Sensor und einen Laser aufweisen, mindestens drei an dem zu vermessenden Rundprofil anliegende und das Rundprofil umschließende, ein Polygon bildende Schattenkanten erzeugt und vermessen und daraus die entsprechenden Tangenten errechnet werden.

In der Stahlindustrie werden sog. Langprodukte in spezialisierten Walzstraßen gewalzt, um die gewünschten Endprodukte zu erhalten. Sollen diese Langprodukte zu Rundstäben gewalzt werden, dann werden sie meistens in einem 3-Walzen-Fertiggerüst mit mehreren Walzenblöcken (meistens ein 3-Walzen-Block) auf das Endmaß gewalzt und auf ein Kühlbett zum Abkühlen gefahren. Üblicherweise kommen vier Walzenblöcke mit jeweils drei Walzenscheiben zum Einsatz, wobei die Mittelebenen der Walzenscheiben vom einen zum nächsten Walzenblock um jeweils 60° verschwenkt sind. Derartiger Stabstahl hat oft polygonale Formabweichungen von der Kreisform. Die vorwiegende Form ist "dreiwellig" oder "sechswellig".

Wenn der Durchmesser eines derartigen polygonen Stabstahles mit einem mechanischen Messschieber oder optisch über den Umfang vermessen wird, können alle ermittelten Durchmesser denselben Wert haben. In Wirklichkeit ist das Produkt jedoch nicht rund sondern unrund/wellig. Ein derartiges Produkt wird als "Gleichdick" bezeichnet.

Zur Bestimmung von sog. Gleichdickfehlern wurden und werden Messschieber mit Auflageprismen verwendet. Je nach der Welligkeit des Umfangsprofils werden dabei verschiedene Auflagewinkel empfohlen.

Die mechanische Messung der Rundheit und deren Berechnung sind seit Jahrzehnten in einschlägigen DIN-Normen erläutert und beschrieben, beispielsweise den deutschen Normen DIN ISO 4291 "Verfahren für die Ermittlung der Rundheitsabweichung", DIN ISO 6318 "Rundheitsmessung, Begriffe und Kenngrößen für die Rundheit" und DIN ISO 4292 "Verfahren zum Messen von Rundheitsabweichungen, Zweipunkt- und Dreipunkt-Messverfahren".

Die mechanische Vermessung von Langprodukten der hier in Rede stehenden Art mit mechanischen Rundheitsmessgeräten muss offline erfolgen. Für diese Messung muss ein Muster in eine Präzisionsdrehvorrichtung eingespannt werden. Ein Tastfühler misst die radialen Abweichungen des Profils während der Drehbewegung. Als Resultat wird eine grafische Darstellung des Umfangsprofils mit den auf den jeweiligen Winkelgrad bezogenen Radien erhalten. Die Auswertung dieser Umfangsprofile ist in den eingangs genannten einschlägigen Normen im Detail beschrieben.

Bei der mechanischen Vermessung im Messlabor kann durch Drehen des Musters eine unbegrenzte Zahl von Umfangspunkten ermittelt werden. In der Produktionslinie hingegen, in der das Produkt in Längsrichtung transportiert wird, muss die Messung aller gewünschten Tangenten gleichzeitig erfolgen, um so das Profil eines lokalen Querschnitts ermitteln zu können. Eine mechanische online Vermessung ist daher nicht möglich.

Ein wichtiger Ausgangsparameter bei der Auswertung und Bestimmung der Unrundheit ist der sog. Bezugskreis und dessen Zentrum, auf welche sich alle weiteren Schritte des Messvorganges beziehen. In den Normen werden vier verschiedene Arten der Bestimmung beschrieben.

Neben den mechanischen Messvorrichtungen sind ebenfalls seit Jahrzehnten berührungslose Messvorrichtungen bekannt. So ist beispielsweise in der JP 56-117107 A ein Profilmessverfahren beschrieben, bei dem das zu vermessende Langprodukt mit Hilfe von Laserstrahlen vermessen bzw. abgetastet wird. So beschreibt diese Druckschrift beispielsweise, dass selbst bei einem Gleichdick eine präzise Profilmessung dadurch möglich ist, dass an dem Außenumfang eines Objektes, dessen Profil zu messen ist, eine erste, eine zweite und eine dritte Tangente angelegt wird und durch die Differenz zwischen einem durch diese Tangenten bestimmten Kreis und dem Profil des zu vermessenden Langproduktes dessen Profilmessung erfolgt. Die Anlegung der Tangenten wird dabei mit Hilfe von Laserstrahlen bzw. Projektionsstrahlen vorgenommen.

Auch aus der DE 100 23 172 A ist ein Verfahren zur Messung der Unrundheit von hier in Rede stehenden Rundprodukten beziehungsweise Rundprofilen bekannt. Dabei wird eine Messeinrichtung aus drei oder mehr Laserscannern, die jeweils einen lichtempfindlichen Sensor und einen Laser aufweisen, eingesetzt. Das Rundprodukt wird durch den Laserstrahl von jedem der Laserscanner derart beleuchtet, dass das Rundprodukt ein oder zwei Schattenkanten auf den zugehörigen Sensor wirft. Zu jeder der Schattenkanten wird eine parallel zum Laserstrahl verlaufende Gerade berechnet. Zudem wird aus je drei ermittelten Graden ein Kreis berechnet, an dem die Geraden als Tangenten anliegen. Die Berechnung des Kreises wird wiederholt und die Unrundheit wird als Differenz von größtem und kleinstem Durchmesser der Kreise bestimmt.

Diese Unrundheitsbestimmung hat den Nachteil, dass bei kleinsten Winkelfehlern die Messwerte stark verfälscht werden. Dies ist insbesondere der Fall, wenn die Tangenten nicht genau auf das Maximum oder Minimum des Umfangsprofils zu liegen kommen. Darüber hinaus sind die Zentren der Kreise im Raum nicht festgelegt, was zur Folge hat, dass zum Beispiel bei asymmetrischen Formabweichungen das ermittelte Profil eine der Tangentenanzahl und Anordnungen periodische Symmetrie aufweist und nicht den wahren Profilcharakter wiedergibt.

Aufgabe der vorliegenden Erfindung ist es, ein Verfahren bereitzustellen, mit dem das Profil und die Unrundheit mit Hilfe einer berührungslosen Messeinrichtung in der Produktionslinie möglichst präzise bestimmt werden kann.

Gelöst wird diese Aufgabe durch die Lehre der Ansprüche.

Bei dem erfindungsgemäßen Verfahren werden mindesten drei an dem zu vermessenden Rundprofil anliegende Schattenkanten mit Hilfe einer Messeinrichtung, die mit mindestens zwei Laserscannern ausgestattet sind, erzeugt. Diese Laserscanner besitzen jeweils einen lichtempfindlichen Sensor und einen Laser.

Eine derartige Messeinrichtung ist aus der eingangs genannten JP 56-117107 A und auch der DE 100 23 172 A bekannt.

Sind nur zwei Laserscanner vorhanden, dann muss das zu vermessende Rundprofil vollständig innerhalb des Lichtfeldes beider Laserscanner liegen, damit die erforderlichen (mindestens drei) Schattenkanten mit diesen Laserscannern erzeugt und vermessen werden.

Sind drei Laserscanner vorhanden, dann ist es ausreichend, wenn das Rundprofil nur teilweise beleuchtet wird, so dass pro Laserscanner nur eine Schattenkante erzeugt wird.

Aus diesen Schattenkanten wird eine tangential an das Rundprofil anliegende Gerade beziehungsweise eine Tangente berechnet. Die Winkel der Geraden zueinander sind dabei bekannt. Die Laserscanner werden dabei derart angeordnet beziehungsweise ausgewählt, dass von mindestens drei Schattenkanten ein Polygon erzeugt wird. Das zu vermessende Rundprofil liegt dann innerhalb der durch dieses Polygon aufgespannten Fläche. Im Falle von drei Schattenkanten handelt es sich dabei um eine Dreiecksfläche.

Das erfindungsgemäße Verfahren zeichnet sich nun unter Anderem dadurch aus, dass in der Stufe a) im Messfeld der Messeinrichtung ein Zentrum Z₀ kalibriert und festgelegt wird. Die Ebene des Messfeldes ist dabei zweckmäßigerweise senkrecht zur Vorwärtsbewegung der Rundprofile angeordnet. Die Kalibrierung der Messeinrichtung und somit die Festlegung des Zentrums Z₀ im Messfeld muss nur einmal durchgeführt werden, beispielsweise beim Zusammenbau der Messeinrichtung und/oder nach dem Einbau in die Walzstrasse, bevor die Online-Messung von hier in Rede stehenden Rundprofilen vorgenommen wird. Es empfiehlt sich jedoch, die Kalibrierung von Zeit zu Zeit zu überprüfen und gegebenenfalls zu wiederholen.

In der Stufe b) des erfindungsgemäßen Verfahrens werden von dem Zentrum Z₀ zu den während des Verfahrens gemessenen Tangenten Senkrechte bestimmt und dadurch der Abstand des Zentrums Z₀ zu den Tangenten errechnet.

Aus den in der Stufe b) errechneten Daten werden in der Stufe c) die Eckpunkte des das Rundprofil umschließenden Polygons errechnet, wobei eine Kontur ermittelt wird.

In diese Kontur wird dann in der Stufe d) des erfindungsgemäßen Verfahrens ein Bezugskreis gelegt. Dieser Bezugskreis kann dabei auf vier verschiedene Arten festgelegt werden, nämlich:

i)Der Bezugskreis wird derart gelegt, dass die quadratische Formabweichung der Kontur zu diesem Bezugskreis ein Minimum erreicht.

ii) Der Bezugskreis wird derart gelegt, dass er den kleinstmöglichen Kreis darstellt, der um die Kontur passt.

iii) Der Bezugskreis wird derart gelegt, dass er den größtmöglichen Kreis darstellt, der in die Kontur passt, oder

iv) der Bezugskreis wird derart bezüglich der Kontur gelegt, dass dieser Bezugskreis zusammen mit einem weiteren, zu dem Bezugskreis konzentrischen Kreis die Kontur bei minimaler Radiendifferenz einschließt.

Diese alternativen Möglichkeiten der Definition des Bezugskreises entsprechen den in den eingangs genannten Normen vorgegebenen Definitionen. Diesbezüglich wird insbesondere auf die DIN ISO 6318 "Rundheitsmessung" verwiesen. Die Definition der genannten Bezugskreise findet sich dort unter 5. wie folgt:

5.1 Kreis der kleinsten Abweichungsquadrate (LSC),
5.2 kleinster umschriebener Kreis (MCC),
5.3 größter einbeschriebener Kreis (MIC), und
5.4 Kreise mit kleinster Ringzone (MZC).

Nach der Errechnung und Festlegung des Bezugskreises wird bei dem erfindungsgemäßen Verfahren in Stufe e) der Durchmesser des Bezugskreises errechnet. Aus der Lage im Raum wird das Bezugszentrum Zp errechnet, das den Mittelpunkt des Bezugskreises darstellt.

In der Stufe f) des erfindungsgemäßen Verfahrens werden von diesem Bezugszentrum mindestens zwei Vektoren von diesem Bezugszentrum Zₚ zur Kontur berechnet. Aus diesen Daten wird die Unrundheit bestimmt.

Es müssen im Übrigen nicht alle erzeugten Schattenkanten zur Berechnung der entsprechenden Tangenten herangezogen werden. Die Auswahl der zur Durchführung der weiteren Berechnung herangezogenen Schattenkanten wird je noch Erfordernis und den gewünschten Parametern, beispielsweise Abstand oder Winkel der Tangenten, vorgenommen. Analoges gilt für die Anzahl der Senkrechten, welche den weiteren Berechnungen zu Grunde gelegt werden.

Es versteht sich jedoch von selbst, dass die Kontur beziehungsweise das Profil umso genauer abgebildet wird, je mehr Tangenten gleichzeitig gemessen werden.

Die Anzahl der Laserscanner ist allerdings in der Regel aus Kostengründen und wegen der beschränkten Baugröße der Messeinrichtung beschränkt. Um das Profil trotzdem möglichst komplett darstellen zu können, wird vorzugsweise aus den verfügbaren Daten über das Polygon eine Kontursimulation errechnet. Eine derartige Kontursimulation kann als numerische Approximation mit Polygonen als stetige Funktion ausgedrückt werden (Approximationssatz von Weierstrass). Vorzugsweise erfolgt die Kontursimulation mit Hilfe einer angepassten Spline-Interpolation. Derartige Glättungsberechnungen sind dem Fachmann im Übrigen gut bekannt.

Dieses Vorgehen erlaubt es, alle möglichen Analysen und Messverfahren anschließend anzuwenden und dabei die Gesamtheit des Profilcharakters berücksichtigen zu können. Insbesondere gibt es typische Messgrößen, die in einem bestimmten Winkel zum Rundprofil ermittelt werden sollen oder in einem bestimmten Winkelverhältnis zur Messeinrichtung stehen müssen. Dies ist zum Beispiel der Fall bei einem 3-Walzen-Gerüst, bei dem die typischen Werte GT und DT beim Optimieren der Einstellen der einzelnen Gerüste, insbesondere für das letzte und zweitletzte Gerüst, sehr wichtig sind.

Ein weiterer Vorteil dieser Kontursimulation ist die Tatsache, dass sie für beliebig viele Laserscanner angewendet werden kann. Die Anordnung dieser Laserscannern und die Winkelteilung muss nicht gleichmäßig bzw. regelmäßig sein, sondern kann je nach Erfordernis gewählt werden. Wichtige diesbezügliche Faktoren sind beispielsweise die räumlichen Gegebenheiten und die zu erwartenden Formfehler.

Im einfachsten Fall werden beim erfindungsgemäßen Verfahren nur zwei Vektoren und somit der Abstand von Zp zur Kontur bzw. zur Kontursimulation berechnet. Da die Vektoren in unterschiedliche Richtungen zeigen und in den meisten Fällen unterschiedlich groß sind, ergibt sich daraus bereits ein Wert für die Unrundheit. Allerdings handelt es sich dabei in den meisten Fällen auch nur um ein ungefähren Wert für die Unrundheit. Vorzugsweise werden daher diese Vektoren derart bestimmt und berechnet, dass sie den minimalen Abstand Rₘᵢₙ und den maximalen Abstand Rₘₐₓ von Zp zur Kontur bzw. zur Kontursimulation darstellen.

Vorzugsweise werden in der Stufe f) des erfindungsgemäßen Verfahrens ein Satz oder mehrere Sätze von 2, 3 oder mehreren Vektoren (V_{GT1}, V_{GT2} und V_{GT3} bzw. V_{DT1}, V_{DT2} und V_{DT3}) bestimmt werden, die sich von Zp zur Kontur bzw. Kontursimulation erstrecken. Die Vektoren eines Satzes schließen zwischen sich insbesondere den gleichen Winkel ein, z. B. 60° oder 120°. Im Falle von 120° besteht ein derartiges Satz somit aus drei Vektoren.

Vorzugsweise zeigen die Vektoren eines Satzes vom Bezugszentrum Zp in Richtung des Walzenspaltes des letzten Walzgerüstes zeigen, während die Vektoren eines weiteres Satzes vom Bezugszentrum Zp in Richtung der Walzenmitte des letzten Walzgerüstes zeigen.

Im Falle von mehreren Sätzen von Vektoren ist der von den Vektoren eingeschlossene Winkel für alle Sätze von Vektoren vorzugsweise gleich groß. Zudem sind die Vektoren eines Satzes zu den Vektoren der anderen Sätze vorzugsweise zueinander verdreht. So können beispielsweise insbesondere zwei Sätze von jeweils drei Vektoren berechnet werden, wobei die Vektoren jedes Satzes einen Winkel von 120° einschließen. Zeigt beispielsweise ein Vektor des ersten Satzes von Zp in die 0°-Richtung (diese Bezugsrichtung muss natürlich festgelegt werden) des Messfeldes (genauer: der Ebene des Messfeldes) bis zur Kontur bzw. Kontursimulation, dann zeigen die beiden anderen Vektoren in 120°- bzw. 240°-Richtung bis zur Kontur bzw. Kontursimulation. Die drei Vektoren des zweiten Satzes sind dazu um beispielsweise 60° verdreht, so dass sie von Zp in die 60°, 180° und 300°-Richtung zeigen. Daraus lassen sich die für 3-Walzen-Gerüste typischen Werte GT und DT ohne Schwierigkeiten errechnen.

Nach einer weiterhin bevorzugten Ausführungsform wird, wenn aufgrund der begrenzten Zahl von Laserscannern (beispielsweise bei nur drei Laserscannern und nur drei Schattenkanten/Tangenten) nicht genügend Tangenten berechnet werden können, die Messeinrichtung um das Rundprofil gedreht, vorzugsweise in Form einer über 60° oszillierenden Drehbewegung.

In diesem Fall werden die Messungen zu unterschiedlichen Zeitpunkten vorgenommen. Zudem wird die Zeitspanne ermittelt, welche zwischen den einzelnen Messungen vergangen ist. Aus diesen Daten kann ein Bewegungsvektor für das Rundprofil errechnet werden, so dass es möglich wird, die Bewegung des Rundprofils zu erkennen und zu kompensieren. Mit anderen Worten, die gemessenen Daten werden rechnerisch derart verarbeitet, dass sich die zeitlich beabstandet durchgeführten Messungen auf dasselbe Bezugszentrum des Rundprofils beziehen.

Es ist auch möglich, den Winkelbereich der Drehbewegung je nach der Anzahl der erzeugbaren Schattenkanten bzw. Tangenten kleiner als 60° zu wählen.

Ist hingegen eine ausreichende Zahl von Laserscannern vorhanden und/oder können eine ausreichende Zahl von Schattenkanten und somit Tangenten erzeugt werden, dann wird die Messeinrichtung vorzugsweise nicht gedreht.

Die bei der Durchführung des erfindungsgemäßen Verfahrens ermittelten Daten und Messwerte werden auf übliche Weise einer Auswerteeinrichtung übermittelt und dort verarbeitet. Derartige Auswerteeinrichtungen sind bekannter Natur, so dass sich weitere Ausführungen erübrigen.

Die Erfindung wird im Folgenden anhand eines Beispieles unter Bezug auf skizzenhafte Zeichnungen, welche die erfindungsgemäßen Verfahrensschritte graphisch wiedergeben, näher erläutert.

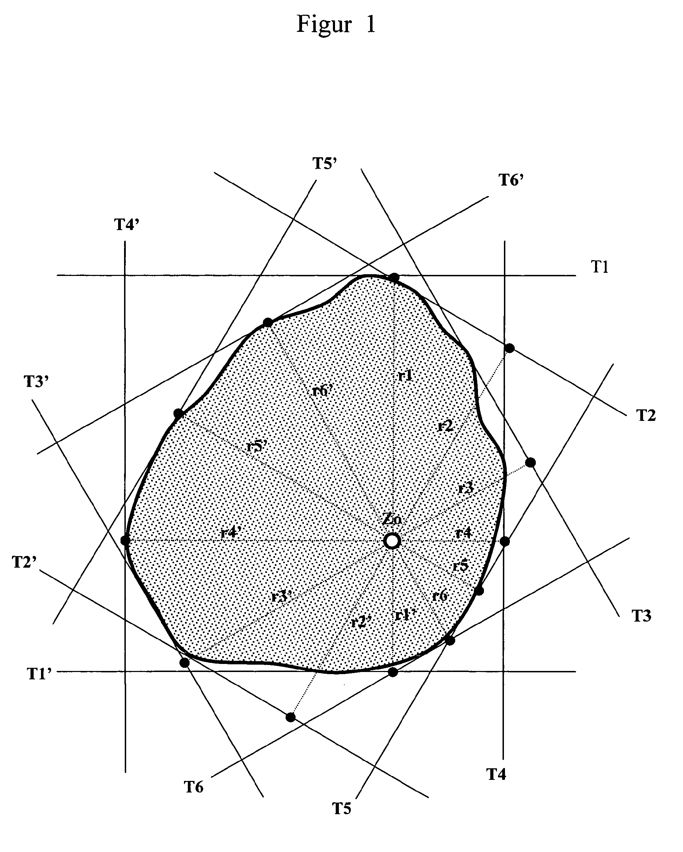

In der Figur 1 ist ein Querschnitt durch ein zu vermessendes Rundprofil dargestellt, dessen Außenkontur mit einem durchgezogenen, fetten Strich dargestellt ist. An dieses Rundprofil werden mit Hilfe von drei Laserscannern insgesamt sechs Schattenkanten angelegt, welche zu den Tangenten T₁, T₂, T₃, T₄, T₅ und T₆ sowie T_{1'}, T_{2'}, T_{3'}, T_{4'}, T₅, und T₆, führen. Dabei gehören Tangentenpaare T₁, T_{1'}; T₂, T_{2'}; T₃, T_{3'}; T₄, T_{4'}; T₅, T_{5'} und T₆, T_{6'} zu jeweils einem Laserscanner. Insgesamt sind somit sechs Laserscanner im Einsatz, wobei das zu vermessende Rundprofil jeweils vollständig im Messfeld dieser Laserscanner liegt.

Das Zentrum Z₀ des Messfeldes der Messeinrichtung wurde im Übrigen vor dem Anlegen der Schattenkanten beziehungsweise Tangenten genauer bestimmt und kalibriert.

Auch wenn im vorliegenden Beispiel insgesamt 12 Tangenten an das Rundprofil angelegt werden, kann diese Anzahl der Tangenten T beliebig sein. Es sind jedoch mindestens drei Tangenten erforderlich, um ein Polygon zu bilden, welches das Rundprofil umschließt. Die Tangenten besitzen dabei eine bekannte Winkellage zueinander.

Nach der Bestimmung der Tangenten werden die Senkrechten r₁, r₂, r₄, r₅, r₆, r_{1',} r_{2',} r_{3'}, r_{4'}, r_{5'} und r_{6'} und damit der senkrechte Abstand von Z₀ zu den jeweiligen Tangenten bestimmt.

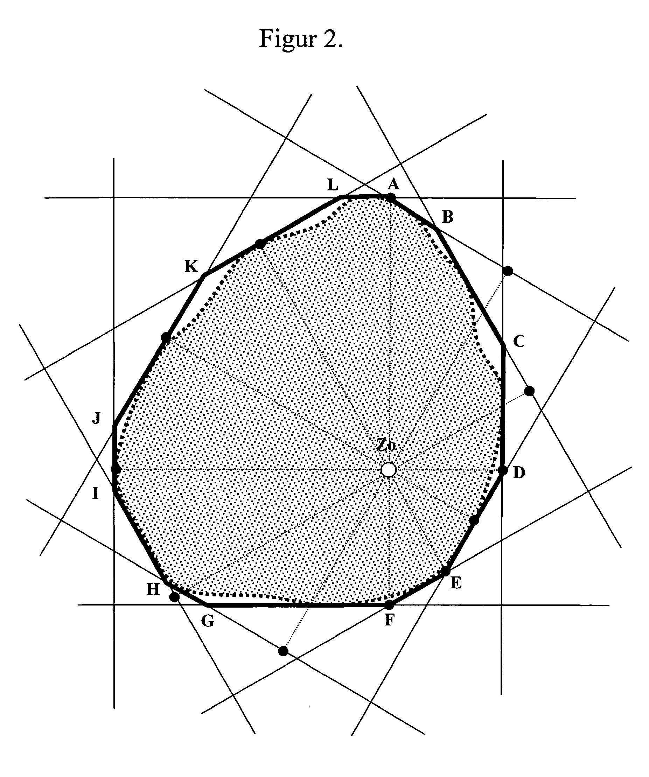

In der Figur 2 ist gezeigt, dass die auf die oben beschriebene Weise erhaltenen Tangenten ein das Rundprofil umschließendes Polygon mit den Ecken A bis L bilden. Das Polygon ist dabei in der Figur 2 mit einer fetten, durchgezogenen Linie dargestellt, während das Rundprofil mit einer gepunkteten Linie wiedergegeben ist.

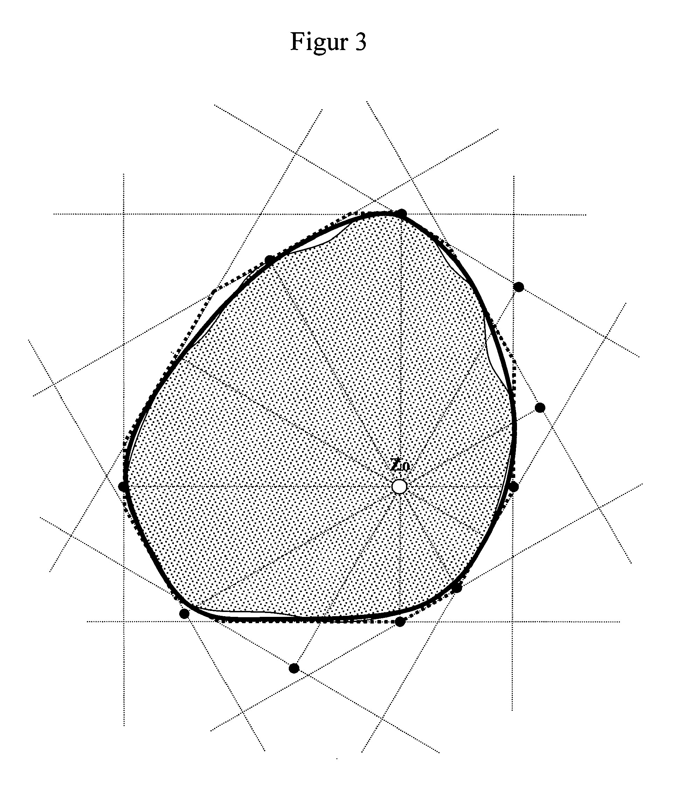

In der Figur 3 ist dargestellt, welche Form das in der Figur 2 gezeigte Polygon (in der Figur 3 mit gepunkteter Linie angedeutet) nach Glättung mit Hilfe einer angepassten Spline-Interpolation erhält. Dadurch entsteht eine Kontursimulation (durchgezogene fette Linie), die weitgehend dem reellen Rundprofil (durchgezogene dünne Linie) entspricht. Auf diese Weise werden auf der ganzen Kurve nutzbare Daten erhalten. Mit anderen Worten, auch für Orte außerhalb der reell durch die Schattenkanten oder Tangenten ermittelten Werte können Daten bestimmt werden.

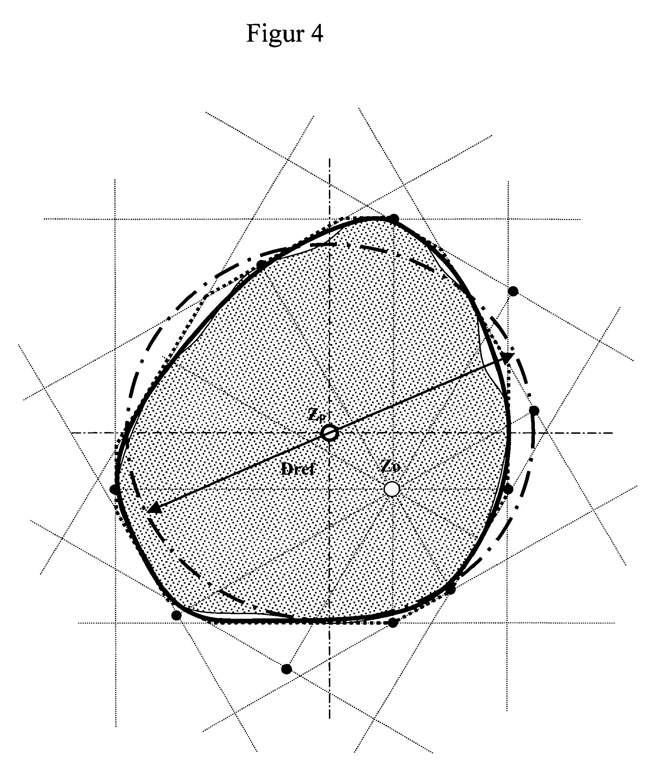

In der Figur 4 ist graphisch dargestellt, wie ein Bezugskreis (strichpunktierte Linie) derart in die Kontursimulation (durchgezogene fette Linie) gelegt wird, dass die quadratischen Formabweichungen der Kontursimulation zu diesem Bezugskreis (strichpunktierte Linie) ein Minimum erreicht. Für diesen Bezugskreis wird dessen Durchmesser D_{ref} errechnet. Aus der Lage des Bezugskreises im Raum wird das Bezugszentrum Zp bestimmt.

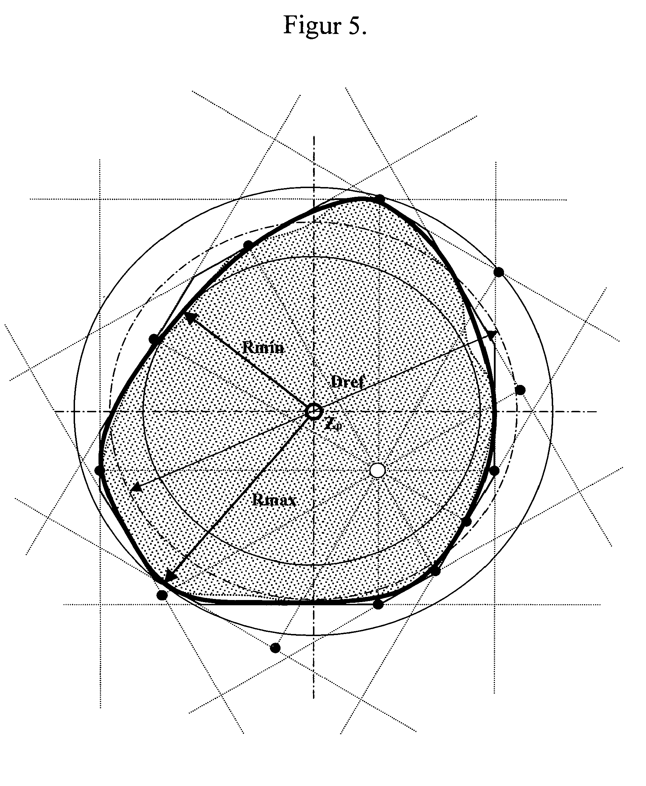

In der Figur 5 ist dargestellt, wie von diesem so bestimmten Zentrum Zp zwei Vektoren, nämlich der minimale Abstand Rₘᵢₙ und der maximale Abstand Rₘₐₓ vom Bezugszentrum Zp zur Kontursimulation ermittelt und aus diesen Werten die Unrundheit bestimmt werden. Die ermittelten Extremwerte können irgendwo auf der Kontursimulation liegen. Sie können somit auch in Winkellagen liegen, die sich in Abschnitten der Kontur zwischen den ursprünglichen Messpunkten befinden.

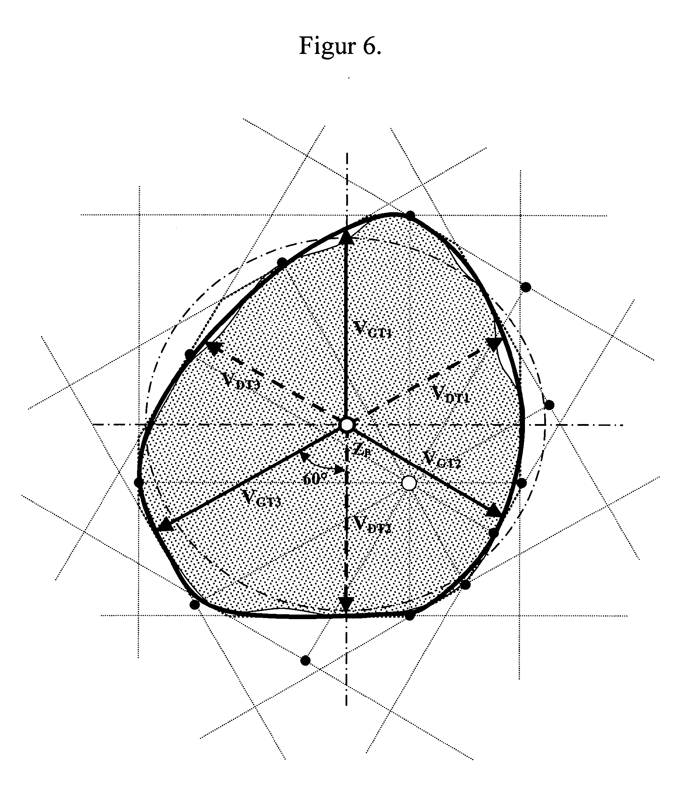

In der Figur 6 ist eine alternative Berechnungsmethode graphisch erläutert. Dabei werden in der Stufe f) des erfindungsgemäßen Verfahrens die Vektoren V_{GT1}, V_{GT2} und V_{GT3} einerseits und V_{DT1}, V_{DT2} und V_{DT3} andererseits berechnet, die sich vom Bezugszentrum Zp in Richtung der Walzenscheiben der beiden letzten 3-Walzengerüste einer Walzstrasse erstrecken, wobei angenommen wird, dass die Mittelebene der Walzenscheiben des vorletzten Walzengerüstes auf 0°, 120° und 240° und die des letzten Walzengerüstes auf 60°, 180° und 300° liegen. Die 0° bzw 180° Ebene liegt in der Figur 6 in derjenigen Ebene, die senkrecht zur Papierebene sowie durch V_{GT1} und V_{DT3} verläuft, und ist mit der senkrecht verlaufenden strichpunktierten Line in der Figur 6 angedeutet. Mit anderen Worten, die Vektoren V_{GT1}, V_{GT2} und V_{GT3} zeigen zum Spalt zwischen den Walzenscheiben des letzten Walzgerüstes, während die Vektoren V_{DT1}, V_{DT2} und V_{DT3} zum Druckpunkt bzw. zur Walzenmitte der Walzen des letzten Walzengerüstes zeigen. Dieser Druckpunkt liegt im Übrigen dort, wo sich der Walzenspalt der Walzen des vorletzten Walzengerüstes üblicherweise befindet.

Aus den Vektoren V_{GT1}, V_{GT2} und V_{GT3} können durch einfache mathematische Berechnungen der für die Einstellung von Walzengerüsten der hier in Rede interessierende Wert GT errechnet werden, bei dem es sich um ein Längenmaß handelt. Analoges gilt für die Vektoren V_{DT1}, V_{DT2} und V_{DT3}, aus den der gewünschte, ebenfalls ein Längenmaß darstellende Wert DT errechnet werden kann.

Dies Werte sind - wie dargelegt - maßgebend für das Optimieren der Einstellung der einzelnen 3-Walzen-Blöcke und sind gegeneinander über einen festen Winkel von 60° verdreht sind.

Häufig kann die für das erfindungsgemäße Verfahren erforderliche Messeinrichtung nicht direkt hinter dem letzten Walzengerüst (beispielsweise aus Platzgründen) sondern erst eine bestimmte Wegstrecke flussabwärts angeordnet werden. Es besteht nun dass Problem, dass sich das fertig gewalzte Rundprofil auf der Wegstrecke vom letzten Walzengerüst bis zur Messebene der Messeinrichtung verdreht, wobei der Winkel, um den sich das Rundprofil auf dieser Wegstrecke um seine Längsachse verdreht, bei den einzelnen Walzstrassen üblicherweise bekannt ist.

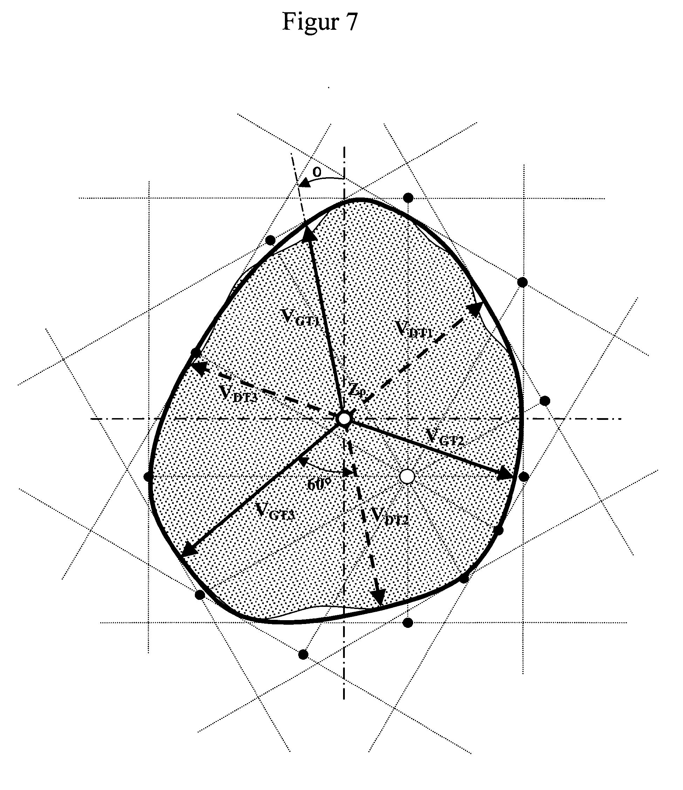

In der Figur 7 ist graphisch dargestellt, wie trotz der Verdrehung des Rundprofils die gewünschte Werte GT und DT berechnet werden können. Da der Verdrehungswinkel, der in der Figur 7 mit α bezeichnet ist, bekannt ist, werden die oben beschriebenen Vektoren nicht in Richtung 0°, 120° und 240° (gilt für V_{GT1}, V_{GT2} und V_{GT3}) bzw. 60°, 180° und 300° (gilt für V_{DT1}, V_{DT2} und V_{DT3}) von Zp bis zur Kontursimulation bestimmt, wie das in der Figur 6 gezeigt ist. Vielmehr werden diese Vektoren ebenfalls um den Verdrehungswinkel α verdreht. Es werden somit die um Zp um den Winkel α verdrehten Vektoren V_{GT1}, V_{GT2} und V_{GT3} bzw. V_{DT1}, V_{DT2} und V_{DT3} von Zp bis zur Kontursimulation (fette durchgezogene Linie) berechnet. Die Vektoren V_{GT1}, V_{GT2} und V_{GT3} sind in der Figur 7 jeweils mit einem Pfeil mit einer durchgezogenen Linie dargestellt, während die Vektoren V_{DT1}, V_{DT2} und V_{DT3} mit einem Pfeil mit einer gestrichelten Linie dargestellt sind.

Somit können vom gleichen Bezugszentrum Zp gemessen auch für beliebige Winkellagen α unter Berücksichtung aller drei Vektoren V_{GT1}, V_{GT2} und V_{GT3} bzw. V_{DT1}, V_{DT2} und V_{DT3} die typischen Werte von GT und DT am Ort des letzten Walzengerüstes ermittelt werden, selbst wenn die Messung erst eine bestimmte Wegstrecke nach dem Verlassen des letzten Walzengerüstes durchgeführt wird.

Da jeder Vektor der Vektoren V_{GT1}, V_{GT2} und V_{GT3} bzw. V_{DT1}, V_{DT2} und V_{DT3} einzeln bestimmbar ist, kann mit dem erfindungsgemäßen Verfahren die absolute Zustellung der einzelnen Walzen der jeweiligen Walzengerüste ermittelt werden. Ist beispielsweise der Druckpunkt einer Walze eines 3-Walzen-Blocks weiter nach radial innen versetzt als die Druckpunkte der beiden anderen Walzen, dann kann dies erfindungsgemäß ermittelt werden. Es muss dann lediglich die radiale Lage nur einer Walze korrigiert werden.

## Patentansprüche

1. Verfahren zur Rundheitsmessung oder Messung der Formabweichung von in ihrer Längsrichtung vorbewegten Rundprofilen in Walzstraßen, bei dem auf per se bekannte Weise mit Hilfe einer Messeinrichtung mit mindestens zwei Laserscannern, die jeweils einen lichtempfindlichen Sensor und einen Laser aufweisen, mindestens drei an dem zu vermessende Rundprofil anliegende und das Rundprofil umschließende, ein Polygon bildende Schattenkanten erzeugt und vermessen und daraus die entsprechenden Tangenten errechnet werden,
**dadurch gekennzeichnet, dass**
a) vor der Messung ein Zentrum (Z₀) in dem Messfeld der Messeinrichtung kalibriert und festgelegt wird, sofern ein derartiges Zentrum (Z₀) noch nicht festgelegt wurde,
b) Senkrechte (r₁, r₂, r₃, r₄, r₅, r₆, r_{1',} r_{2',} r_{3',} r_{4',} r_{5',} r_{6'}) vom Zentrum (Zₒ) zu den Tangenten (T₁, T₂, T₃, T₄, T₅, T₆, T_{1'}, T_{2'}, T_{3'}, T_{4'}, T_{5'}, T_{6'}) bestimmt und somit der Abstand vom Zentrum (Zₒ) zu den Tangenten (T₁ - T_{6'}) errechnet wird,
c) die Eckpunkte (A bis K) des das Rundprofil umschließenden Polygons errechnet werden, wobei eine Kontur ermittelt wird,
d) bezüglich der Kontur ein Bezugskreis derart gelegt wird, dass
i) die quadratische Formabweichung der Kontur zu diesem Bezugskreis ein Minimum erreicht,
ii) der Bezugskreis den kleinstmöglichen Kreis darstellt, der um die Kontur passt,
iii) der Bezugskreis den größtmöglichen Kreis darstellt, der in die Kontur passt, oder
iv) der Bezugskreis zusammen mit einem weiteren, zu dem Bezugskreis konzentrischen Kreis die Kontur bei minimaler Radiendifferenz einschließt,
e) der Durchmesser -(D_{ref}) des Bezugskreises errechnet und aus der Lage im Raum das Bezugszentrum (Zp), das den Mittelpunkt des Bezugskreises darstellt, bestimmt wird und
f) mindestens zwei Vektoren von diesem Bezugszentrum (Zₚ) zur Kontur berechnet werden und aus diesen Daten die Unrundheit bestimmt wird.

2. Verfahren nach Anspruch 1,
**dadurch gekennzeichnet, dass**
das sich an die Stufe c) vor der Stufe d) eine Stufe c1) anschließt, in der das in Stufe c) erhaltene Polygon durch eine numerische Approximation mit Polygonen als stetige Funktion entsprechend dem Approximationssatz von Weierstrass ausgedrückt wird, wobei eine geglättete Kontursimulation erhalten wird, und die Stufen d) bis f) unter Einsatz der Kontursimulation durchgeführt werden.

3. Verfahren nach Anspruch 2,
**dadurch gekennzeichnet, dass**
die Glättung mit Hilfe einer angepassten Spline-Interpolation durchgeführt wird.

4. Verfahren nach einem der vorhergehenden Ansprüche,
**dadurch gekennzeichnet, dass**
die Vektoren in Stufe f) derart errechnet und bestimmt werden, dass es sich um den minimalen Abstand (Rₘᵢₙ) sowie den maximalen Abstand (Rₘₐₓ) vom Bezugszentrum (Zₚ) zur Kontur/Kontursimulation handelt.

5. Verfahren nach einem der Ansprüche 1 bis 4,
**dadurch gekennzeichnet, dass**
ein Satz oder mehrere Sätze von 2, 3 oder mehreren Vektoren (V_{GT1}, V_{GT2} und V_{GT3} bzw. V_{DT1}, V_{DT2} und V_{DT3}) bestimmt werden, die sich vom Bezugszentrum (Zₚ) zur Kontur bzw. Kontursimulation erstrecken, und die Vektoren eines Satzes insbesondere den gleichen Winkel zwischen sich einschließen.

6. Verfahren nach Anspruch 5,
**dadurch gekennzeichnet, dass**
im Falle von mehreren Sätzen von Vektoren der von den Vektoren eingeschlossene Winkel für alle Sätze von Vektoren gleich ist, jedoch die Vektoren eines Satzes zu den Vektoren der anderen Sätze zueinander verdreht sind.

7. Verfahren nach Anspruch 5 oder 6,
**dadurch gekennzeichnet, dass**
die Vektoren eines Satzes vom Bezugszentrum (Zₚ) in Richtung des Walzenspaltes des letzten Walzgerüstes zeigen, während die Vektoren eines weiteres Satzes vom Bezugszentrum (Zₚ) in Richtung der Walzenmitte des letzten Walzgerüstes zeigen.

8. Verfahren nach einem der Ansprüche 5 bis 7,
**dadurch gekennzeichnet, dass**
zwei Sätze von jeweils drei Vektoren berechnet werden und die Vektoren der ersten Satzes zu den Vektoren des zweiten Satzes um einen festen Winkel von 60° gegeneinander verdreht sind und daraus die für 3-Walzen-Gerüste typischen Werte GT und DT ermittelt werden.

9. Verfahren nach einem der vorhergehenden Ansprüche,
**dadurch gekennzeichnet, dass**
die Messeinrichtung um das Rundprofil gedreht wird und insbesondere eine über 60° oszillierende Drehbewegung durchführt.

10. Verfahren nach einem der Ansprüche 1 bis 8,
**dadurch gekennzeichnet, dass**
die Messeinrichtung nicht um das Rundprofil gedreht wird.
